# EUROPEAN PATENT APPLICATION

(11) **EP 4 782 972 A1**
(43) Date of publication of application: **29.07.2026**
(21) Application number: 24880279.5
(22) Date of filing: 18.10.2024
(51) Int. Cl.: G06F 3/048, G06N 3/04, G06V 40/16

(54) **METHOD AND APPARATUS FOR EXPRESSION CREATION, AND DEVICE AND STORAGE MEDIUM**

(30) Priority: 20.10.2023 CN 202311367887
(71) Applicant: Lemon Inc., Grand Cayman, KY1-1205 (KY)
(72) Inventor: OEFVERSTROEM, Thomas, Singapore 018960 (SG); CHEN, Yue, Beijing 100028 (CN); TAN, Siqi, Culver City, California 90230 (US); ZHOU, Jiuyu, Singapore 018960 (SG)
(74) Representative: Grünecker Patent- und Rechtsanwälte PartG mbB
(86) International application number: PCT/SG2024/050668
(87) International publication number: WO 2025/084990

(57) **Abstract**

According to embodiments of the disclosure, a method, an apparatus, a device, and a storage medium for expression creation are provided. The method includes: obtaining, in response to an expression creation operation, a target image input by a user, the target image including at least a face of a target object; obtaining at least one expression image of a first type, the at least one expression image being generated by using an image generation model based on at least the target image, the at least one expression image corresponding to at least one expression pattern, and each expression image including a change object corresponding to the target object; and storing the at least one expression image into an expression library associated with the user for use in a message interaction. Thus, by means of the image generation capability of the model, the user may complete the customization of the expression image by simply providing the target image to obtain his own unique expression image.

## Description

This application claims priority to Chinese Patent Application No. 2023113678873, filed October 20, 2023, and entitled "Method, Apparatus, Device, and Storage Medium for Expression Creation", the entire content of which is incorporated herein by reference.

### FIELD

Example embodiments of the present disclosure generally relate to the field of computers, and in particular, to a method, an apparatus, a device, and a computer-readable storage medium for expression creation.

### BACKGROUND

Nowadays, an increasing number of applications are designed to provide various services to users. Many applications may support message interaction between the users. Messages may include various types of messages, such as videos, images, audios, texts, or the like. In a process of message interaction with other users, a user may send an expression image to improve the interestingness of interaction. The user expects to interact with various expression images to further improve the information amount and the interaction efficiency in the process of message interaction.

### SUMMARY

In a first aspect of the present disclosure, a method for expression creation is provided. The method includes: obtaining, in response to an expression creation operation, a target image input by a user, the target image including at least a face of a target object; obtaining at least one expression image of a first type, the at least one expression image being generated by using an image generation model based on at least the target image, the at least one expression image corresponding to at least one expression pattern, and each expression image including a change object corresponding to the target object; and storing the at least one expression image into an expression library associated with the user for use in a message interaction.

In a second aspect of the present disclosure, an apparatus for expression creation is provided. The apparatus includes: a target image obtaining module configured to obtain, in response to detecting an expression creation operation, a target image input by a user, the target image including at least a face of a target object; an expression image obtaining module configured to obtain at least one expression image of a first type, the at least one expression image being generated based on at least the target image by using an image generation model, the at least one expression image corresponding to at least one expression pattern, and each expression image including a change object corresponding to the target object; and an expression image storage module configured to store the at least one expression image into an expression library associated with the user for use in a message interaction.

In a third aspect of the present disclosure, an electronic device is provided. The device includes at least one processing unit; and at least one memory coupled to the at least one processing unit and storing instructions for execution by the at least one processing unit. The instructions, when executed by the at least one processing unit, cause the device to perform the method of the first aspect.

In a fourth aspect of the present disclosure, a computer-readable storage medium is provided. The computer-readable storage medium has a computer program stored thereon, and the computer program is executable by a processor to implement the method of the first aspect.

It should be understood that the content described in this content section is not intended to limit the key features or major features of embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, in which:
FIG. 1 illustrates a schematic diagram of an example environment in which embodiments of the present disclosure may be implemented;
FIG. 2 illustrates a schematic diagram of an example architecture for expression creation according to some embodiments of the present disclosure;
FIGS. 3A and 3B illustrate schematic diagrams of an example of an image shooting interface according to some embodiments of the present disclosure;
FIGS. 4A to 4C illustrate schematic diagrams of an example of an image shooting interface according to some embodiments of the present disclosure;
FIG. 4D illustrates a schematic diagram of an example of a progress page according to some embodiments of the present disclosure;
FIGS. 5A to 5E are schematic diagrams illustrating an example of an image selection interface according to some embodiments of the present disclosure;
FIG. 6 illustrates a schematic diagram of an example of a progress page according to some embodiments of the present disclosure;
FIG. 7 illustrates a schematic diagram of an example of a further page presenting a second progress indicator according to some embodiments of the present disclosure;
FIGS. 8A and 8B illustrate schematic diagrams of examples of presenting a push notification according to some embodiments of the present disclosure;
FIG. 9 illustrates a schematic diagram of an example of a messaging interface for presenting at least one expression image according to some embodiments of the present disclosure;
FIG. 10A illustrates a schematic diagram of an example of a messaging interface for presenting an expression guidance card according to some embodiments of the present disclosure;
FIG. 10B illustrates a schematic diagram of an example of a messaging interface for presenting a first embedded message according to some embodiments of the present disclosure;
FIGS. 11A and 11B illustrate schematic diagrams of examples of a messaging interface for presenting a second embedded message according to some embodiments of the present disclosure;
FIGS. 12A to 12D illustrate schematic diagrams of examples of a messaging interface for presenting an expression viewing panel according to some embodiments of the present disclosure;
FIGS. 13A to 13C illustrate schematic diagrams of examples of presenting an expression panel according to some embodiments of the present disclosure;
FIGS. 14A and 14B illustrate schematic diagrams of an example of a messaging interface for presenting an expression navigation bar according to some embodiments of the present disclosure;
FIGS. 15A and 15B illustrate schematic diagrams of an example of a comment reply interface for presenting an expression navigation bar according to some embodiments of the present disclosure;
FIGS. 16A to 16C illustrate schematic diagrams of examples of a message page according to some embodiments of the present disclosure;
FIG. 17 illustrates a flowchart of a process for expression creation according to some embodiments of the present disclosure;
FIG. 18 illustrates a flowchart of an apparatus for expression creation according to some embodiments of the present disclosure; and
FIG. 19 illustrates a block diagram of an electronic device in which one or more embodiments of the present disclosure may be implemented.

### DETAILED DESCRIPTION

Embodiments of the present disclosure will be described in more detail below with reference to the accompanying drawings. While certain embodiments of the present disclosure are shown in the accompanying drawings, it should be understood that the present disclosure may be implemented in various forms, and should not be construed as being limited to the embodiments set forth herein, but rather, these embodiments are provided for a more thorough and complete understanding of the present disclosure. It should be understood that the drawings and embodiments of the present disclosure are for illustrative purposes only and are not intended to limit the scope of the present disclosure.

In the description of the embodiments of the present disclosure, the terms "including" and the like should be understood as an open-ended inclusion, i.e., "including but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below.

Herein, unless explicitly stated, "in response to A" performing one step does not imply that this step is performed immediately after "A", but one or more intermediate steps may be included.

It may be understood that data involved in the technical solution (including but not limited to the data itself, obtaining or use of the data) should follow the requirements of the corresponding laws and regulations and related provisions.

It may be understood that, before the technical solutions disclosed in the embodiments of the present disclosure are used, the type, the usage scope, the usage scenario and the like of personal information related to the present disclosure should be notified to the user in an appropriate manner according to the relevant laws and regulations, and the authorization from the user should be obtained.

For example, in response to receiving an active request from a user, prompt information is sent to the user to explicitly prompt the user that the requested operation will need to obtain and use personal information of the user, so that the user may autonomously select whether to provide personal information to software or hardware, such as an electronic device, an application program, a server, or a storage medium, executing the operation of the technical solution of the present disclosure according to the prompt information.

As an optional but non-limiting implementation, in response to receiving an active request from the user, a manner of sending prompt information to the user may be, for example, in the form of a pop-up window, and the prompt information may be presented in a text manner in the pop-up window. In addition, the pop-up window may further carry a selection control for the user to select "agree" or "not agree" to provide personal information to the electronic device.

It may be understood that the foregoing notification and obtaining a user authorization process are merely illustrative, and do not constitute a limitation on implementations of the present disclosure, and other manners of meeting related laws and regulations may also be applied to implementations of the present disclosure.

As briefly mentioned above, a user may enable interaction with messages between other users in an application. In a process of interaction with other users, the user may send an expression image to improve the interestingness of interaction.

In some solutions that allow a user to customize expressions, most solutions are to provide the user with a predetermined option to generate an expression image. In some scenarios, the user may also be enabled to provide an image and a predetermined template may be filled based on the image to generate a corresponding expression image. In other scenarios, the user may be allowed to select a color, a hair style, a facial feature, etc. of a facial skin in the expression image. However, although a traditional expression creation supports an expression image created by a user by himself, the user needs to create an image based on a limited option or a template, which may cause expression images created by different users to have no larger difference, and there may be possibility that different users create the same expression image. That is, the traditional expression creation solution cannot realize the creation of customized expressions of different users. Therefore, it is desirable to easily and conveniently implement the customization of the expression images for different users.

According to an embodiment of the present disclosure, an improved solution for expression creation is provided. According to the solution of the embodiment of the present disclosure, if an expression creation operation corresponding to a first type is detected in a user interface supporting a message interaction, a target image input by a user and including at least a face of a target object is obtained. At least one expression image of the first type is generated by using an image generation model based on the target image and the prompt input. At least one expression image of the first type is obtained. The prompt input indicates at least one expression pattern to be generated, and each expression image includes a change object corresponding to the target object. A face of the change object has a corresponding expression pattern. At least one expression image is stored in an expression library associated with the user for use in the message interaction.

In this way, according to the embodiments of the present disclosure, by means of the image generation capability of the model, the user may complete the customization of the expression image by simply providing the target image to obtain his own unique expression image. Such an image creation process is simple and may provide different expression images for different users, thereby enriching the message interaction process.

Example embodiments of the present disclosure are described below with reference to the accompanying drawings.

### Example Environment

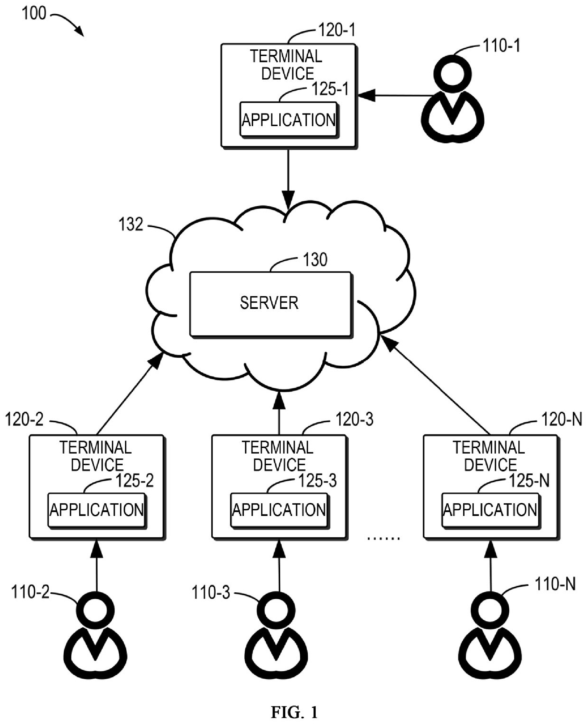

FIG. 1 illustrates a schematic diagram of an example environment 100 in which embodiments of the present disclosure may be implemented. In the environment 100, a user 110 may post a video in a target platform through an associated terminal device 120. In some scenarios, the user 110 is also referred to as a poster of a video.

One or more users 110-1, 110-2, 110-3, ..., 110-N may send or receive messages through their respective associated terminal devices 120-1, 120-2, 120-3, ..., 120-N. For ease of discussion, users 110-1, 110-2, 110-3, ..., 110-N may be collectively or individually referred to as a user 110, and the terminal devices 120-1, 120-2, 120-3, ..., 120-N may be collectively or individually referred to as a terminal device 120.

An application 125 supporting message interaction may be installed in the terminal device 120 (that is, an application 125-1 is installed in the terminal device 120-1, an application 125-2 is installed in the terminal device 120-2, an application 125-3 is installed in the terminal device 120-3, ... and an application 125-N is installed in the terminal device 120-N). It should be noted that the applications 125 installed in different terminal devices 120 may be the same application or different applications (for example, in different versions). The application 125 may be any suitable application having a messaging function, for example, a dedicated chat application, a social application, a content sharing application, an office support application, or the like.

In the environment 100 of FIG. 1, if the application 125 is in an active state, the terminal device 120 may present a user interface of the application 125. The user interface may include various types of interfaces that may be provided by the application 125, such as a user interface that supports message interaction, a user interface that supports content browsing, a messaging interface, and the like. Via different user interfaces, the application 125 may provide different content to the user 110. By appropriate manners, such as clicking or selecting any appropriate element in the user interface, the application 125 may also provide the user 110 with selection and switching of presentation of the associated content.

In some embodiments, different terminal devices 120 may also communicate with a server 130 through a network 132, to implement the supply of the message interaction service. The server 130 may provide functions such as management, configuration, and maintenance of the application 125.

The terminal device 120 may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a television receiver, a radio broadcast receiver, an electronic book device, a gaming device, or any combination of the foregoing, including accessories and peripherals of these devices, or any combination thereof. In some embodiments, the terminal device 120 may also support any type of interface for a user (such as a "wearable" circuit, etc.). The server 130 may be various types of computing systems/servers capable of providing computing capability, including, but not limited to, a mainframe, an edge computing node, a computing device in a cloud environment, or the like.

It should be understood that the structures and functions of various elements in the environment 100 are described for illustrative purposes only and do not imply any limitation to the scope of the present disclosure.

Various example implementations of the present disclosure will be described in detail below.

### Example Framework

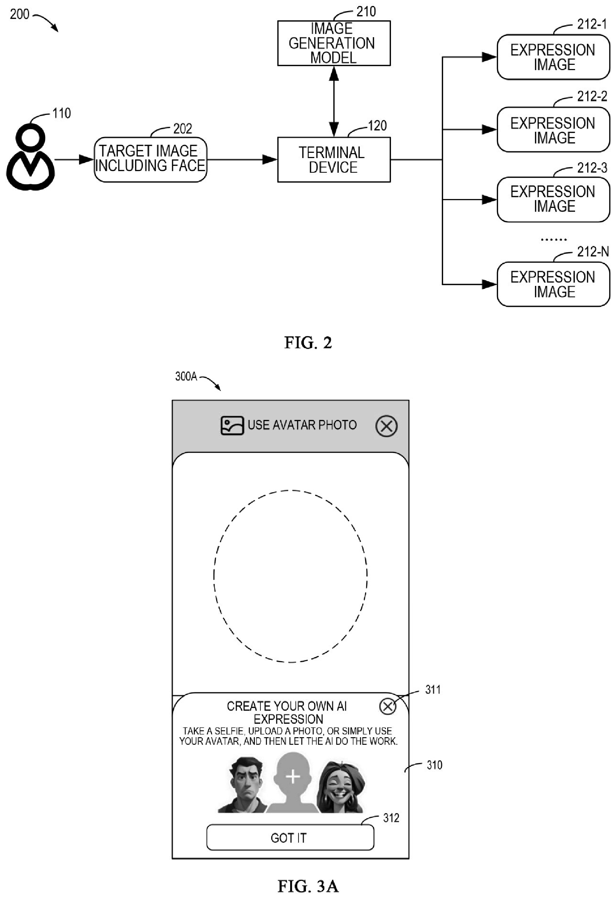

FIG. 2 illustrates a schematic diagram of an example architecture 200 for expression creation according to some embodiments of the present disclosure. As shown in FIG. 2, the architecture 200 relates to a terminal device 120 and an image generation model 210.

The image generation model 210 may run locally on the terminal device 120 or deployed remotely, for example, in a server (for example, the server 130), in a cloud environment, or the like. When running locally, the terminal device 120 may directly provide the input of the model to the image generation model 210 installed locally, and obtain the model output generated by the image generation model 210. In the case of remote operation, the terminal device 120 provides data to other electronic devices through a communication connection between the terminal device 120 and other electronic devices. The other electronic devices determine the model input based on the acquired data and provide this model input to the image generation model 210. After obtaining the model output of the image generation model 210, the other electronic devices provide the model output to the terminal device 120 through the communication connection between the other electronic devices and the terminal device 120, so that the terminal device 120 obtains the model output. For ease of description, an example in which the image generation model 210 is installed locally on the terminal device 120 (that is, the terminal device 120 may directly provide the model input to the image generation model 210 and may directly obtain the model output from the image generation model 210) may be taken as illustrative description in the following.

In an embodiment of the present disclosure, the terminal device 120 obtains, in response to an expression creation operation, a target image input by a user, to initiate an expression creation process. In some embodiments, in a case that the application 125 is in an active state, the terminal device 120 may present a user interface provided by the application 125 and supporting a message interaction. The terminal device 120 may detect an expression creation operation in a user interface supporting the message interaction. In some embodiments, the expression creation operation may be a general expression creation operation, or an expression creation operation corresponding to a first type. The first type herein may be, for example, a type corresponding to an AI expression. The user interface supporting the message interaction may include, for example, an overall creation entry for expression creation, or a first expression creation entry for creating an expression corresponding to the first type. The terminal device 120 may determine, in response to detecting a trigger operation by the user 110 on the overall creation entry or the first expression creation entry, that an expression creation operation is detected. It may be understood that, in some embodiments, a plurality of creation entries corresponding to various types of expressions may be provided in the user interface supporting the message interaction, the plurality of creation entries include a first expression creation entry and a creation entry(ies) corresponding to other type(s) of expression(s), and the present disclosure does not limit the number of creation entries included in the user interface and the types of expressions corresponding to other entry entries.

In response to detecting the expression creation operation, the terminal device 120 obtains a target image 202 input by the user 110 and including a face (also abbreviated as a target image 202). The target image 202 is an image including at least a face of a target object, and the target object herein may be an object, such as a person, an animal or the like, having various facial expressions. For example, the terminal device 120 may capture the target image 202 input by the user 110 through an image acquisition device (for example, a camera). For example, the terminal device 120 may further obtain a target image 202 selected by the user 110 and stored locally on the terminal device 120.

The terminal device 120 may, in turn, generate at least one expression image 212 of the first type based at least on the target image 202 (e.g., which may include expression images 212-1, 212-2, 212-3, ..., 212-N, where N is a positive integer, the expression images 212-1, 212-2, 212-3, ..., 212-N may be collectively or individually referred to as an expression image 212) by using the image generation model 210. The at least one expression image corresponds to at least one expression pattern. Different expression patterns may convey different facial expressions, emotions, such as smile, laugh, sadness, crying, etc.

Herein, the image generation model 210 may be any suitable machine learning model with image generation capability. For example, the image generation model 210 may be based on a diffusion model, such as a three-dimensional animation diffusion model.

The quality of the image generated by the image generation model 210 is affected by the model training data and the currently input target image 202. In some embodiments, in order to ensure the quality of the generated expression image 212 as much as possible, the terminal device 120 may also use a series of face detection models (for example, which may include an eye detection model, an angle detection model, an expression detection model, etc.) to detect the target image 202. The terminal device 120 may provide the target image 202 to the image generation model 210 only after the target image 202 has passed through detection of a series of face detection models. In some embodiments, the series of face detection models may also be used to direct the user 110 to provide a target image 202 that meets requirements. For example, if the target image 202 cannot pass the detection, the terminal device 120 may present, based on a detection result output by the series of face detection models, prompt information that prompts the user 110 how to obtain the target image 202 meeting the requirement.

In some embodiments, the expression pattern for generating the expression image 212 may include at least one predefined expression pattern, at least one expression pattern indicated by the user, and/or at least one expression pattern determined based on a trend event, or the like. The predefined expression pattern herein may be, for example, a pre-acquired default expression pattern, that is, an expression pattern output by the model by default during the expression creation process. The expression pattern indicated by the user may be, for example, a user selectable or customizable expression pattern. For example, before creating the expression image, a list of selectable expression patterns may be provided to the user to enable the user to select one or more expression patterns to be created therefrom. In some implementations, the user may be allowed to define, by natural language input or by providing a reference image, an expression pattern to be generated. Here, the expression pattern determined based on the trend event may be at least one expression pattern matching the trend event and determined by the terminal device 120 through the analysis of the trend event. For example, if the current time corresponds to a certain festival, the terminal device 120 may determine at least one expression pattern matching the festival, and generate the expression image automatically by using the determined expression pattern when the user needs to create an expression.

In some embodiments, the image generation model 210 may generate at least one expression image 212 based on the target image 202 and the prompt input. The prompt input may indicate a style and/or at least one expression pattern of the at least one change object to be generated. The style of the change object refers to an appearance style, type of the change object presented in the generated expression image 212. The prompt input is configured to at least guide the image generation model 210 to generate a corresponding style and/or expression pattern. In some embodiments, the prompt input and the object style/expression pattern may be a one-to-one, one-to-many, or many-to-one relationship. That is, one expression pattern may correspond to one prompt input, one prompt input may correspond to multiple expression patterns, or one expression pattern may correspond to multiple prompt inputs. For example, Table 1 illustrates examples of correspondences between expression patterns and prompt inputs.

**Table 1**

| # | Expression Pattern | Prompt Input |
|---|---|---|
| 1 | Happy/Joyful/Finding something funny | Smile, Laugh, Shining eyes, Raised cheeks |
| 2 | Loving/Liking | Warm smile, Gentle gaze |
| 3 | Sad/Sorrowful | Frowning, Crying, Drooping shoulders, Downward-turned mouth |
| 4 | Scared/Fearful | Wide-open eyes, Raised eyebrows, Open mouth |
| 5 | Confused | Confused expression, Tilted head, Furrowed brows |
| 6 | Angry | Furrowed brows, Clenched fists, Glaring eyes |
| 7 | Surprised | Wide-open eyes, Dropped jaw |
| 8 | Enthusiastic | Bright eyes, Radiant smile |
| 9 | Bored | Dazed or vacant expression, Half-closed or drooping eyelids |
| 10 | Doubtful | Raised eyebrows, Furrowed brows, Confused expression |
| ... | ... | ... |

As shown in Table 1, the terminal device 120 may determine a corresponding prompt input based on the expression pattern, or determine a corresponding expression pattern based on the prompt input. For example, the terminal device 120 may obtain at least one expression pattern to be generated corresponding to the at least one expression image 212, and determine at least one prompt input corresponding to the at least one expression pattern based on the Table 1.

In some embodiments, alternatively or additionally, the image generation model 210 may also generate at least one expression image 212 based on the user selection (plus the target image 202, and/or the prompt input). The user selection indicates a style and/or expression pattern of at least one change object to be generated. That is, the user may be allowed to select the style or expression style of the desired change object as needed.

The terminal device 120 may provide the target image 202 input by the user and the constructed prompt input to the image generation model 210 together, so that the image generation model 210 generates at least one expression image 212 based on the prompt input and the target image 202. Herein, the expression image may also be referred to as an expression, an emoticon, an expression sticker, or the like. Herein, the expression image 212 generated by means of the model is also referred to as an AI expression image or abbreviated as an AI expression, to distinguish an expression that is not generated by the model. The number of expression images 212 generated may, for example, be equivalent to the number indicated by the prompt input. In some embodiments, the expression image 212 may be a static expression image or a dynamic expression image (i.e., a dynamic image).

It should be noted that, in a case that a certain expression pattern corresponds to a plurality of prompt inputs, the terminal device 120 may, for example, provide the plurality of prompt inputs as the prompt input corresponding to the expression pattern to the image generation model 210, to obtain the plurality of expression images 212 corresponding to the plurality of prompt inputs that are generated by the image generation model 210. The plurality of expression images 212, although corresponding to the same expression pattern, are different images. That is, the image generation model 210 may generate a plurality of different expression images 212 corresponding to one expression pattern based on the plurality of prompt inputs.

Each expression image 212 includes a change object corresponding to the target object. The change object refers to that the target image is converted into a specific image or appearance style, for example, the change object included in the expression image 212 may be designed according to a specific drawing style such as cartoon character, sketch and oil painting. In some embodiments, the face of the change object in each expression image 212 has a corresponding expression pattern.

The terminal device 120 may store the obtained at least one expression image 212 in the expression library associated with the user 110 for use in a message interaction. The expression library may be, for example, an expression library of an account corresponding to the user 110 in the application 125. After the user 110 logs in to the corresponding account, the user 110 may select a desired expression image from the expression library to perform message interaction in the process of message interaction. In some embodiments, the terminal device 120 may further review the obtained at least one expression image 212 to determine whether the at least one expression image 212 includes an inappropriate expression image (for example, whether the at least one expression image 212 includes an expression image that is excessively strange or distorted). The terminal device 120 may then store an expression image that has passed the review. Alternatively or additionally, in some embodiments, the generated at least one expression image 212 may also be reviewed by the image generation model 210 itself, and only the expression image 212 that has passed the review is provided to the terminal device 120.

In some embodiments, if the image generation model 210 is installed on other electronic devices, after the image generation model 210 generates the at least one expression image 212, the other electronic devices (or the image generation model 210) may immediately delete the obtained target image 202 to ensure the information security of the user 110.

In this way, by means of the image generation capability of the model, the user may complete customization of the expression image by simply providing the target image, to obtain the user's own unique expression image. The image creation process is simple, different expression images may be provided for different users, and the message interaction process is richer.

Example embodiments of expression creation are described below with continued reference to the example interfaces/example pages shown in FIGS. 3A to 16C.

### Example Interface for Expression Creation

FIGS. 3A to 16C illustrate schematic diagrams of example interfaces/example pages according to some embodiments of the present disclosure. It should be understood that the interface/page shown in the drawings is merely an example, and various page designs may actually exist. Individual graphical elements in the interface/page may have different arrangements and different visual representations, one or more elements of which may be omitted or replaced, and one or more other elements may also be present. Embodiments of the present disclosure are not limited in this regard. The example interfaces/example pages shown in FIGS. 3A to 16C may be presented at the terminal device 120. For ease of discussion, the example interfaces/example pages shown in FIGS. 3A to 16C will be described with reference to the environment 100 of FIG. 1.

In some embodiments, the terminal device 120 may provide an image shooting interface or an image selection interface in a case of detecting an expression creation operation corresponding to a first type. The terminal device 120 may capture an image by using a camera in the image shooting interface. The terminal device 120 may select the captured image in the image selection interface. In some embodiments, if the expression creation operation is detected, the terminal device 120 may provide option cards including at least a first option corresponding to the image shooting interface and a second option corresponding to the image selection interface. The terminal device 120 may present the image shooting interface in response to detecting a selection operation on the first option, and present the image selection interface in response to detecting a selection operation on the second option.

In some embodiments, the terminal device 120 may further predetermine a default interface. The terminal device 120 presents the predetermined default interface in response to detecting the expression creation operation. The terminal device 120 may present other interfaces in response to detecting a trigger operation on any appropriate interface element in the default interface. For example, the default interface may be an image shooting interface, and the terminal device 120 may switch to presenting the image selection interface in response to detecting a triggering operation on any suitable interface element (for example, an interface switching control) in the image shooting interface.

In some embodiments, the terminal device 120 may further present, on the image shooting interface, a prompt panel for providing prompt information. As shown in FIG. 3A, the terminal device 120 may present, for example, in response to detecting the expression creation operation, an example 300A including a prompt panel 310. The example 300A may be, for example, an image shooting interface that includes a prompt panel and is presented by default. The prompt panel 310 may present prompt information that prompts how to create an expression image (that is, an AI expression) (for example, a text "create your own AI expression; take a selfie, upload a photo, or simply use your avatar, and then let the AI do the task"). An example effect of the expression image may also be presented in the prompt panel 310 (for example, an exemplary expression image may be presented). The prompt panel 310 further includes an operation control 311 and an operation control 312. The terminal device 120 may cancel presentation of the prompt panel 310 in response to detecting a trigger operation on any area outside the prompt panel 310 in the operation control 311, the operation control 312, or the example 300A.

It should be noted that, regarding the prompt logic of the prompt panel, in some embodiments, each time the terminal device 120 detects the expression creation operation, it presents the image shooting interface including the prompt panel by default. In some embodiments, the terminal device 120 may also present the image shooting interface including the prompt panel only if the expression creation operation is detected for the first time (or for the first few times (which may be a predetermined number of times)), and then the image shooting interface that does not include the prompt panel is presented again when the expression creation operation is detected again.

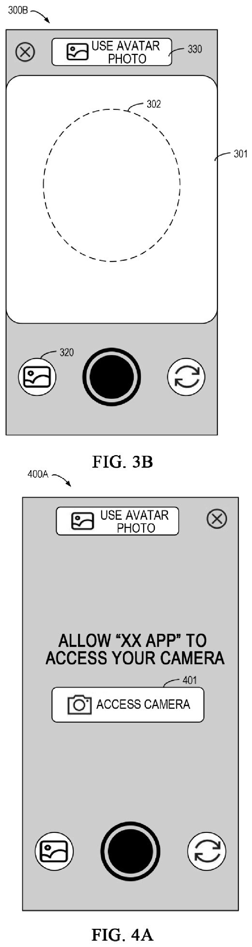

After presentation of the prompt panel 310 is canceled, the terminal device 120 may, for example, present an example 300B shown in FIG. 3B. The example 300B may be, for example, an image shooting interface that does not include a prompt panel. The example 300B may include a predetermined border 302 for defining a facial contour. In some embodiments, the example 300B may include an area 301 for presenting the captured image. That is, the terminal device 120 may present the image captured by using the camera in the area 301. For example, the predetermined border 301 may be superimposed on the area 301, or presented in the area 301.

In some embodiments, before presenting the image shooting interface (for example, before presenting the image shooting interface for the first time), the terminal device 120 further needs to obtain permission to allow access to the camera. For example, the terminal device 120 may present an example 400A shown in FIG. 4A. A prompt text for prompting the user 110, e.g., "allow "XX APP" to access your camera" may be presented in the example 400A. The example 400A may also be presented with an operation control 401. The terminal device 120 may determine, in response to detecting a trigger operation on the operation control 401, that the permission to allow access to the camera is obtained, and then present the image shooting interface shown in FIG. 3B (that is, the example 300B).

In some embodiments, after the terminal device 120 captures the image by using the camera in the example 300B, it may further determine whether the captured image meets a condition related to a face area while the image is presented in the area 301. The condition related to the face area may include, for example, at least one condition of the following: the face area of the target object in the captured image being within a predetermined border 302; the face of the target object in the captured image being at eye level; or a neutral expression being displayed on the face of the target object in the captured image. As mentioned above, the terminal device 120 may, for example, determine whether the captured image satisfies the condition related to the face area by using a series of face detection models.

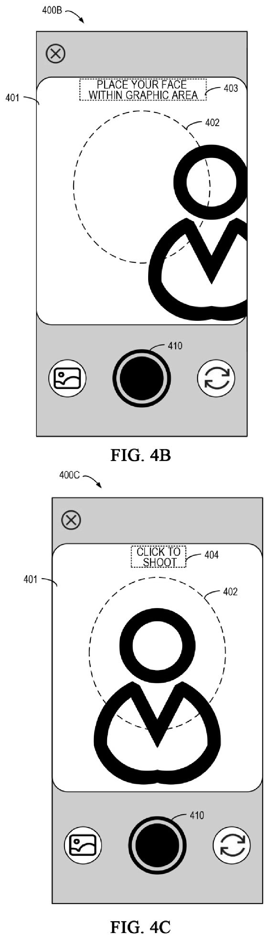

In some embodiments, if it is determined that the image captured in the example 300B does not satisfy the condition related to the face area, the terminal device 120 may also provide prompt information for prompting recapture of the image. In some embodiments, the prompt information may be preset fixed prompt information. For example, the prompt information may be prompt information such as "please adjust a position of the face". In some embodiments, the prompt information may also be determined based on one or more conditions of the at least one condition that are not satisfied. For example, if it is determined that the captured image does not satisfy the condition that the face area of the target object in the captured image is located within the predetermined border 302, the terminal device 120 may present prompt information such as "place your face within the predetermined area". If it is determined that the captured image does not satisfy the condition that the face of the target object in the captured image is at eye level, the terminal device 120 may present prompt information such as "please use the neutral expression". If it is determined that the captured image does not satisfy the condition that a neutral expression is displayed on the face of the target object in the captured image, the terminal device 120 may present prompt information such as "please use a neutral expression". As shown in FIG. 4B, the terminal device 120 may present prompt information 403 in response to the face area being located at an area outside the predetermined border 402 (the predetermined border 402 corresponds to the predetermined border 302 in FIG. 3B), including two possibilities, i.e., one of which is that all of the face area is located outside the predetermined border 402 and one of which is that the face area is partially outside the predetermined border 402. The prompt information 403 may be located at any suitable location in the area 401 (the area 401 corresponding to the area 301 in FIG. 3B), e.g., it may be located above or below the area 401, etc. The prompt information 403 may also be located at other positions of the example 400B, which is not limited in the present disclosure.

In some embodiments, if it is determined that the captured image satisfies the condition related to the face area, the terminal device 120 may obtain the captured image as the target image. Specifically, in some embodiments, if it is determined that the captured image satisfies the condition related to the face area, the terminal device 120 may present prompt information for prompting the user 110 to capture an image. As shown in FIG. 4C, if it is determined that the captured image satisfies the condition related to the face area, the terminal device 120 may present prompt information 404 in an example 400C to prompt the user to capture an image. The terminal device 120 may capture an image currently presented in the area 401 in response to detecting a selection operation on a shooting control 410.

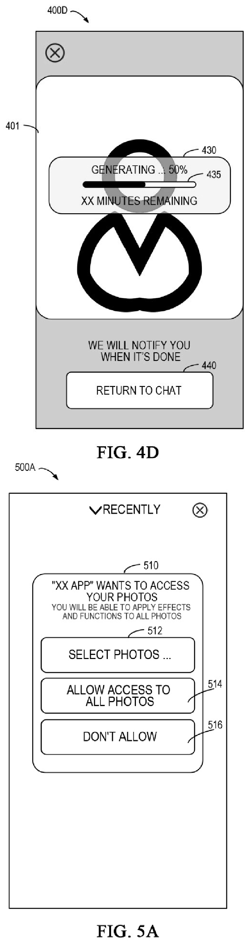

The terminal device 120 may determine the captured image as the target image. After obtaining the captured image, the terminal device 120 may present an example 400D shown in FIG. 4D. The example 400D may be, for example, a progress page presenting the captured target image and presenting a first progress indicator 435. The first progress indicator 435 herein may be configured to indicate a creation progress of creating at least one expression image based on the captured target image. In some embodiments, the terminal device 120 may present an area 430 for presenting the first progress indicator 435, and the area 430 may for example be superimposed and displayed on the area 401. The area 430 may also present a descriptive text for describing a real-time creation progress. It may be understood that the area 430 may be located at any position in the example 400D, which is not limited in the present disclosure.

The above describes a plurality of examples in which an image is captured by using a camera in an image shooting interface and the captured image is determined as a target image, and the following will continue to describe a plurality of examples in which the captured image is selected in an image selection interface, and the selected image is determined as the target image.

Referring back to FIG. 3B, the example 300B also includes a switching control 320. The terminal device 120 may switch to presenting the image selection interface in response to detecting a selection operation on the switching control 320. It may be understood that, in some embodiments, the terminal device 120 may further present the image selection interface in response to detecting the expression creation operation. Similar to the image shooting interface, in some embodiments, before presenting the image selection interface (e.g., before presenting the image selection interface for the first time), the terminal device 120 further needs to obtain permission to allow access to the captured image. For example, the terminal device 120 may present an example 500A shown in FIG. 5A.

A prompt card 510 may be presented in the example 500A. A prompt text for prompting the user 110, i.e., ""XX APP" wants to access your photos; you will be able to apply effects and functions to all photos." is presented in the prompt card 510. The prompt card 510 may also include, for example, an operation control 512 that indicates that an image is selected and the selected image is only allowed to be obtained, an operation control 514 that indicates that all images stored in the terminal device 120 are allowed to be accessed, and an operation control 516 that it is not allowed to access to an image. The terminal device 120 may obtain, in response to detecting the selection operation on the operation control 512 or the operation control 514, an access permission of an image selected by the user 110 or obtain the access permission of the image, and then only include an image selection interface of the selected image or present the image selection interface including all the images. It may be understood that the selected image or at least some of all images may be presented in the image selection interface, and the user 110 may, for example, view more images through a sliding operation. For ease of description, an example in which the terminal device 120 presents an image selection interface including all images will be illustratively described in the following.

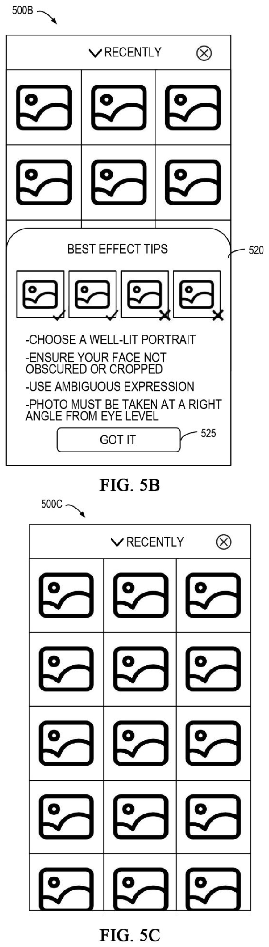

In some embodiments, the terminal device 120 may further present, on the image selection interface, a prompt panel for providing prompt information. As shown in FIG. 5B, the terminal device 120 may present, for example, an example 500B including a prompt panel 520 in response to detecting an expression creation operation or in response to detecting a selection operation on the switching control 320 in the example 300B. The example 500B may be, for example, an image selection interface including a prompt panel. An example of an appropriate target image (e.g., an image that satisfies a condition related to the face area) and an example of an inappropriate target image (e.g., an image that does not satisfy the condition related to the face area) may also be presented in the prompt panel 520. The prompt panel 520 further includes an operation control 525. The terminal device 120 may cancel, in response to detecting a trigger operation on the operation control 525 or any area outside the prompt panel 520 in the example 500B, presentation of the prompt panel 520. After the presentation of the prompt panel 520 is canceled, the terminal device 120 may, for example, present an example 500C shown in FIG. 5C. The example 500C may be, for example, an image selection interface that does not include a prompt panel. A plurality of images having access permission may be presented in the example 500C.

Similarly, regarding the prompt logic of the prompt panel, in some embodiments, each time the terminal device 120 presents the image selection interface, the image selection interface including the prompt panel will be presented by default. In some embodiments, the terminal device 120 may also present the image selection interface including the prompt panel only if the image selection interface is presented for the first time (or the image selection interface is presented for the first few times (which may be a predetermined number of times)), and then the image selection interface that does not include the prompt panel is presented when the image selection interface is presented again.

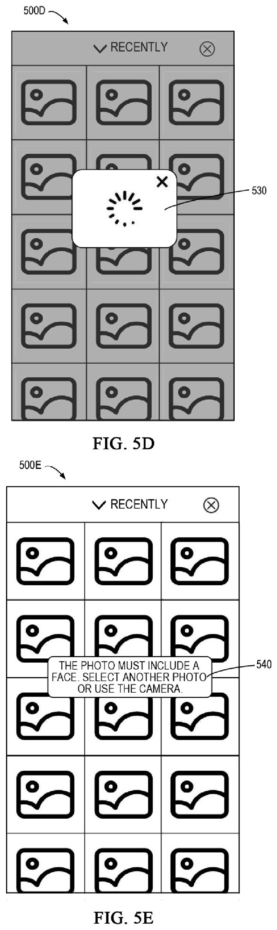

The terminal device 120 may determine that the selected image is obtained in response to receiving a trigger operation on any image presented in the image selection interface. The terminal device 120 may also determine whether the selected image satisfies a condition related to the face area. For example, the terminal device 120 may determine, by using a series of face detection models, whether the selected image satisfies a condition related to the face area. The terminal device 120 may, for example, present an example 500D shown in FIG. 5D in a process of determining whether the selected image satisfies a condition related to the face area. An element 530 is presented in the example 500D. The element 530 indicates that terminal device 120 is currently detecting the selected image to determine whether the selected image satisfies a condition related to the face area.

Similarly, if it is determined that the image selected in the image selection interface does not satisfy the condition related to the face area, the terminal device 120 may provide prompt information for prompting the re-selection of the image. The prompt information may be preset and fixed, or may be determined based on one or more conditions of the at least one condition that are not satisfied. For example, if it is determined that the selected image does not satisfy the condition that the face area of the target object is located within the predetermined border, the terminal device 120 may present prompt information, for example, "No face is detected. Select another photo or use the camera". If it is determined that the selected image does not satisfy the condition that the face of the target object is at eye level, the terminal device 120 may present, for example, prompt information that "Photo must be taken from an angle of the eye level. Select another photo, or use the camera". If it is determined that the selected image does not satisfy the condition that a neutral expression being displayed on the face of the target object in the image, the terminal device 120 may present prompt information, for example, that "Expression is not neutral. Select another photo or use the camera". As shown in FIG. 5E, if it is determined that the image selected in the image selection interface does not satisfy the condition related to the face area, the terminal device 120 may present prompt information 540. The prompt information 540 may be located at any suitable location of the example 500E.

If it is determined that the selected image satisfies the condition related to the face area, the terminal device 120 may obtain the selected image as a target image. That is, the terminal device 120 may determine the image selected by the user 110 as the target image.

In some embodiments, in addition to selecting the captured image in the image selection interface, the terminal device 120 may further obtain an avatar image of the user 110, and detect the avatar image to determine whether the avatar image satisfies a condition related to the face area. In some embodiments, if it is determined that the avatar image of the user satisfies a condition related to the face area, the terminal device 120 may present, in the image shooting interface, a second expression creation entry for the avatar image of the user. The terminal device 120 may further obtain the avatar image of the user as the target image based on a trigger for the second expression creation entry. For example, the terminal device 120 may determine, in response to a trigger for the second expression creation entry, a selection of the avatar image of the user, and then determine the selected avatar image of the user as the target image.

Referring back to FIG. 3B, if it is determined that the avatar image of the user satisfies a condition related to the face area, the terminal device 120 may present a creation entry 330 (i.e., the second expression creation entry) in the example 300B. It may be understood that, if it is determined that the avatar image of the user does not satisfy the condition related to the face area, the terminal device 120 may not present the creation entry 330 in the example 300B. The terminal device 120 may determine the avatar image of the user as the target image in response to detecting a selection operation on the creation entry 330.

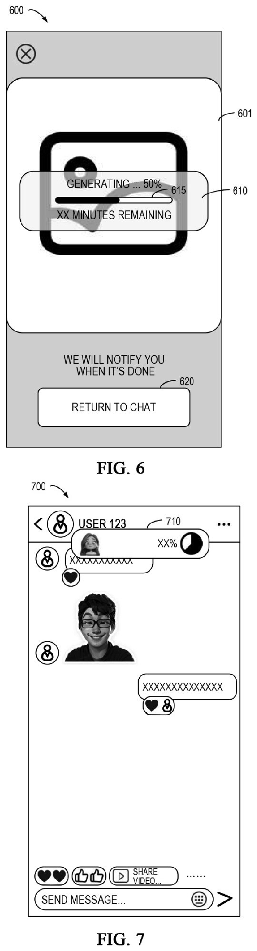

After obtaining the selected target image (the image selected by the user 110 in the image selection interface or the avatar image of the user), the terminal device 120 may present an example 600 shown in FIG. 6. The example 600 may, for example, be a progress page presenting the selected target image and presenting a first progress indicator 615. The first progress indicator 615 herein may be configured to indicate a creation progress of creating at least one expression image based on the selected target image. In some embodiments, the terminal device 120 may present an area 610 for presenting the first progress indicator 615, and the area 610 may, for example, be superimposed and displayed on an area 601. The area 601 may be configured, for example, to present the selected target image. The area 610 may also present a descriptive text for describing a real-time creation progress. It may be understood that the area 610 may be located at any position in the example 600, which is not limited by the present disclosure.

In the process of creating the at least one expression image, the terminal device 120 may further provide a further page other than the progress page, and present a second progress indicator for indicating the creation progress of the at least one expression image in the further page. For example, the terminal device 120 may enable a jump to the progress page in response to detecting a trigger operation on the second progress indicator. As shown in FIGS. 4D, 6, and 7, the example 400 further includes an operation control 440, and the example 600 further includes an operation control 620. The terminal device 120 may present an example 700 shown in FIG. 7 in response to detecting a trigger operation on the operation control 440 or the operation control 620. The example 700 may be, for example, a further page other than the progress page and presenting a second progress indicator 710. The example 700 may be, for example, a messaging interface between a user 110 and other users. The second progress indicator 710 may, for example, be presented in the form of a dynamic island. The terminal device 120 may switch back to display the example 400D or the example 600 based on a trigger for the second progress indicator 710.

After the creation of the at least one expression image is completed, the terminal device 120 may further provide a push notification to indicate that the expression creation is completed. The push notification includes a first expression viewing entry to view at least one expression that has been created. In some embodiments, the terminal device 120 may further provide different patterns of first expression viewing entries. For example, if a user interface currently presented by the terminal device 120 is an interface provided by the application 120, the terminal device 120 may provide the first expression viewing entry in a first pattern, and if the user interface currently presented by the terminal device 120 is not an interface that may be provided by the application 120, the terminal device 120 may provide the first expression viewing entry in a second pattern.

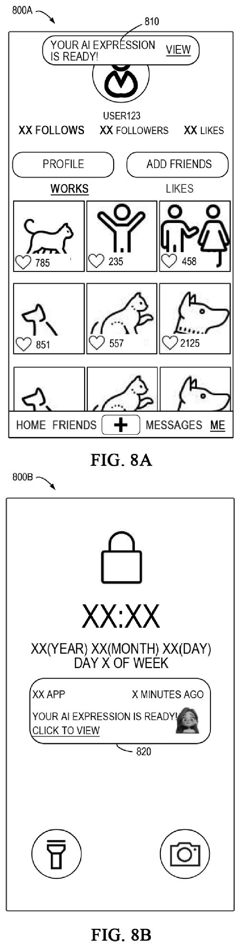

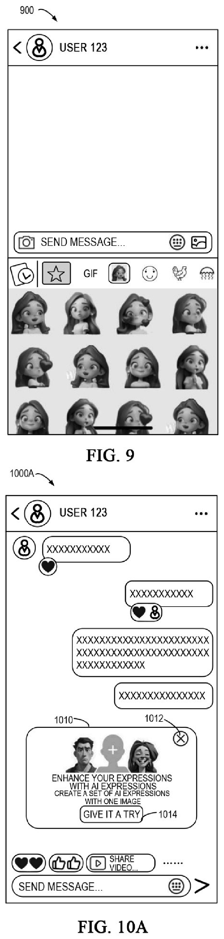

As shown in FIGS. 8A, 8B, and 9, an example 800A may be, for example, a user interface provided by application 120, and an example 800B may be, for example, a user interface that may not be provided by application 120 (that is, in addition to the user interface that may be provided by application 120). The terminal device 120 may, for example, provide a first expression viewing entry 810 in the example 800A, and a first expression viewing entry 820 in the example 800B. The terminal device 120 may then, in response to detecting a trigger operation on the first expression viewing entry 810 or the first expression viewing entry 820, switch back to presenting the example 900 provided by the application 120 to view the created at least one expression. The example 900 may be, for example, a messaging interface.

Various example embodiments of creating at least one expression image after detecting an expression creation operation are described above. A specific process of detecting an expression creation operation will be described below with reference to the accompanying drawings.

As mentioned above, the terminal device 120 detects an expression creation operation corresponding to a first type in a user interface supporting message interaction. The terminal device 120 may present, in the user interface, a first expression creation entry for the first type. The terminal device 120 may detect the expression creation operation based on a trigger for the first expression creation entry. The user interface herein may include, for example, a messaging interface between the user 110 and a further user or multiple other users (that is, a private chat interface between the user 110 and the further user or a group chat interface between the user and the multiple other users, and for ease of description, a messaging interface herein may be taken as a private chat interface between the user 110 and the further user), a comment reply interface for a work, a message page including a list of messaging interfaces, or the like.

For the messaging interface, the terminal device 120 may present, in the messaging interface, an expression guidance card including at least a first expression creation entry for the first type. The expression guidance card is maintained to be presented after the last message of the messaging interface. That is, if the messaging page includes 3 messages, the expression guidance card is presented after the 3rd message. If a new message appears in the messaging page (that is, if 4 messages are included in the messaging page, the new message may be a message received by the user 110, or may be a message sent by the user 110), the expression guidance card is presented after the 4th message (that is, a newly occurring message).

Regarding when the expression guidance card is presented in the messaging interface, the terminal device 120 may pre-obtain at least one condition for presenting the expression guidance card. For example, the at least one condition may include at least one of the user failing to create an expression image of the first type, the messaging interface including at least one historical message, or the messaging interface excluding an unread message. The terminal device 120 presents the expression guidance card in the messaging interface only when at least one condition for presenting the expression guidance card is satisfied. That is, the terminal device 120 presents the expression guidance card in the messaging interface only when at least one of the following is satisfied: the user failing to create the expression image of the first type, the messaging interface including at least one historical message, or the messaging interface excluding an unread message. In some embodiments, since there is a case in which the terminal device 120 needs to present a pop-up window/banner/window or the like when presenting the messaging interface, in this case, in order to avoid affecting the information browsing of the user 110, even if at least one condition for presenting the expression guidance card is satisfied, the terminal device 120 does not present the expression guidance card.

In some embodiments, in a case that the terminal device 120 presents the expression guidance card in the messaging interface, if a cancel presentation operation on the expression guidance card is detected, the terminal device 120 may cancel presentation of the expression guidance card, and present a first embedded message in the messaging interface, the first embedded message including at least the first expression creation entry. As an example, the expression guidance card may include, for example, a cancel control. For example, the terminal device 120 may determine, in response to detecting a trigger operation on the cancel control in the expression guidance card, that the cancel presentation operation on the expression guidance card is detected and cancel the presentation of the expression guidance card. Further, if it is detected that a new message is received or sent in the messaging interface, or in response to detecting that presentation of the messaging interface is canceled, the terminal device 120 may cancel presentation of the first embedded message. It should be noted that a cancellation logic of the first embedded message is different from a cancellation logic of the expression guidance card. In some embodiments, if it is detected that a new message is received or sent in the messaging interface, the terminal device 120 may still present the expression guidance card, and the expression guidance card is presented after the new message.

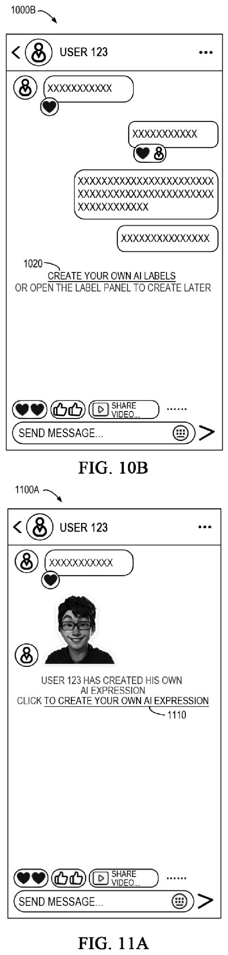

As shown in FIGS. 10A and 10B, an example 1000A and an example 1000B may be, for example, a messaging interface between the user 110 and a further user (e.g., a user 123). If at least one of the following is satisfied: the user failing to create the expression image of the first type, the example 1000A including at least one historical message, and the example 1000A excluding an unread message, the terminal device 120 may present an expression guidance card 1010 in the example 1000A. The expression guidance card 1010 may present guidance information in a text form and an image form. The expression guidance card 1010 includes a first expression creation entry 1014 for a first type. For example, the terminal device 120 may determine, in response to detecting a trigger operation on the first expression creation entry 1014, that the expression creation operation corresponding to the first type is detected. The expression guidance card 1010 may further include a cancel control 1012, and the terminal device 120 may, for example, cancel presentation of the expression guidance card 1010 in response to detecting a touch operation on the cancel control 1012, or detecting a touch operation on an area other than the first expression creation entry 1014 in the expression guidance card 1010. The terminal device 120 may in turn present the example 1000B. In the example 1000B, the terminal device 120 presents the first embedded message 1020. The first embedded message 1020 also includes a first expression creation entry, and the first expression creation entry in the first embedded message 1020 may be, for example, a text of "create your own AI expression". The terminal device 120 may, in response to receiving or sending a new message in the example 1000B, or in response to detecting that presentation of the example 1000B is canceled (e.g., the user 110 exits a private chat with the user 123), the terminal device 120 may cancel presentation of the first embedded message 1020.

In some embodiments, in order to avoid frequently presenting the expression guidance card or the first embedded message to affect the user experience of the user, the terminal device 120 may again present the expression guidance card or the first embedded message only when a duration between the moment at which presentation of the expression guidance card or the first embedded message is canceled and the current moment satisfies a predetermined duration. The expression guidance card and the first embedded message may respectively correspond to different predetermined durations. For example, a first predetermined duration corresponding to the expression guidance card may be, for example, 7 days, and a second predetermined duration corresponding to the first embedded message may be, for example, 30 days. That is, there is a case in which a duration between the moment at which presentation of the expression guidance card is canceled last time and the current moment satisfies a first predetermined duration, and a duration between the moment at which presentation of the first embedded message is canceled last time and the current moment does not satisfy a second predetermined duration. In this case, the terminal device 120 may present the expression guidance card in the messaging interface. The terminal device 120 cancels, in response to detecting a cancel presentation operation on the expression guidance card, presentation of the expression guidance card and does not present the first embedded message. It may be understood that, if the duration between the moment at which presentation of the expression guidance card is canceled last time and the current moment does not satisfy the first predetermined duration, the terminal device 120 does not present the expression guidance card in the messaging interface, or does not present the first embedded message.

Also for the messaging interface, in some embodiments, the terminal device 120 may further present, based on receiving a message from a further user in the messaging interface and the message including a first expression image of the first type, a second embedded message including at least the first expression creation entry in the messaging interface.

Regarding the presentation logic of the second embedded message, in some embodiments, the terminal device 120 may obtain at least one condition about presentation of the second embedded message in advance. The at least one condition may include, for example, at least one condition of the user failing to create the expression image of the first type or the expression guidance card being not presented in the messaging interface. The terminal device 120 presents the second embedded message in the messaging interface only when at least one condition for presenting the second embedded message is satisfied. That is, the terminal device 120 presents a second embedded message in the messaging interface only when at least one of the following is satisfied: the user failing to create the expression image of the first type, or the expression guidance card being not presented in the messaging interface.

As shown in FIG. 11A, an example 1100A may be, for example, a messaging interface between the user 110 and a further user (e.g., a user 123). If at least one of the following is satisfied: the user failing to create the expression image of the first type or the expression guidance card being not presented in the messaging interface, the terminal device 120 may present a second embedded message 1110 in the example 1100A. The second embedded message 1110 includes a first expression creation entry, and the first expression creation entry in the second embedded message 1110 may be, for example, a text of "Create your AI expression".

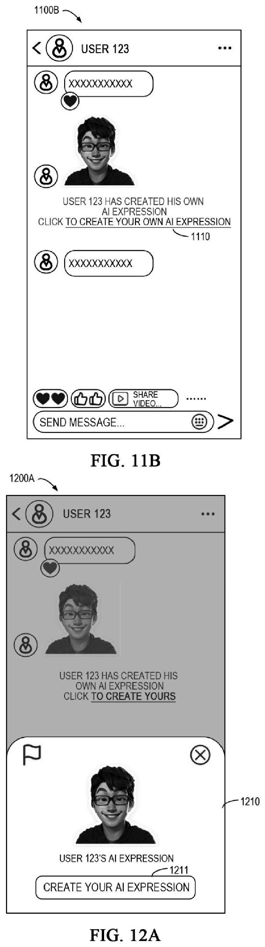

In some embodiments, the terminal device 120 may present the second embedded message after a message from a further user. If a new message (i.e., a new message from a further user) is received in the messaging interface, the terminal device 120 may present the received new message after the second embedded message. As shown in FIGS. 11A and 11B, if a new message (i.e., a new message from a user 123) is received in an example 1100A, the terminal device 120 may present an example 1100B. In the example 1100B, the terminal device 120 presents the received new message after the second embedded message 1110.

In some embodiments, if there is a first type of second expression image that has been sent or received in the messaging interface, the terminal device 120 may present, in response to detecting a trigger operation on the second expression image, an expression viewing panel for the second expression image in the messaging interface. The expression viewing panel may include the first expression creation entry.

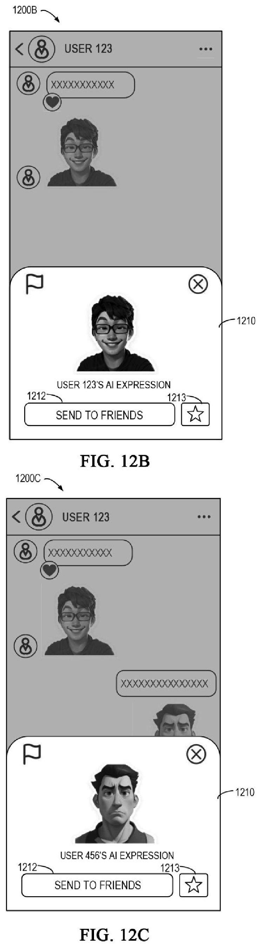

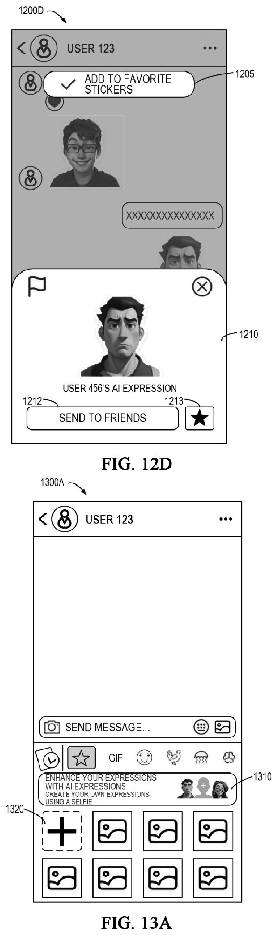

It should be noted that the expression viewing panel may not include the first expression creation entry. The terminal device 120 determines that the first expression creation entry is provided in the expression viewing panel, and then presents the expression viewing panel including the first expression creation entry only when at least one of the user 110 failing to create an expression image of the first type or the second expression image being not created by the user is determined. For example, as shown in FIG. 12A, the terminal device 120 may present, in response to detecting a trigger operation on the second expression image, an example 1200A including an expression viewing panel 1210. The expression viewing panel 1210 presents a second expression image shown in FIG. 12A and a first expression creation entry 1211 only when at least one of the user 110 failing to create an expression image of the first type or the second expression image being not created by the user 110 is determined.

In some embodiments, if the user 110 (that is, a user 456 as shown) has created the expression image of the first type or the second expression image is created by the user 110, the expression viewing panel includes at least one of a sending control and a favorite control for the second expression image. As shown in FIGS. 12B to 12D, the expression viewing panel 1210 presented in examples 1200B to 1200D includes a sending control 1212 and a favorite control 1213. If the second expression image is not created by the user 110, but the user 110 has created an expression image of the first type, the terminal device 120 may present the example 1200B. If the user 110 has created an expression image of the first type, the terminal device 120 may present the example 1200C. If a trigger operation on the favorite control 1213 is detected in the example 1200C, the terminal device 120 may present the example 1200D. In response to the favorite control 1213 being triggered, the terminal device 120 may adjust a presentation style of the favorite control 1213 in the expression viewing panel 1210 in the example 1200D, and present prompt information 1205 for prompting that the expression image has been favorited in the example 1200D.

In some embodiments, the terminal device 120 may further present, in response to detecting a trigger operation on the expression panel in the messaging interface, an expression panel at least provided with the first expression creation entry for the first type in the messaging interface. For example, the terminal device 120 may determine, in response to detecting a trigger operation on an input box, or a trigger operation on any appropriate control, that a trigger operation on the expression panel is detected. In some embodiments, the expression panel may include at least one of a first expression creation entry specific to the first type or an overall first expression creation entry. The terminal device 120 may, for example, at least present the first expression creation entry specific to the first type based on a trigger for the overall first expression creation entry.

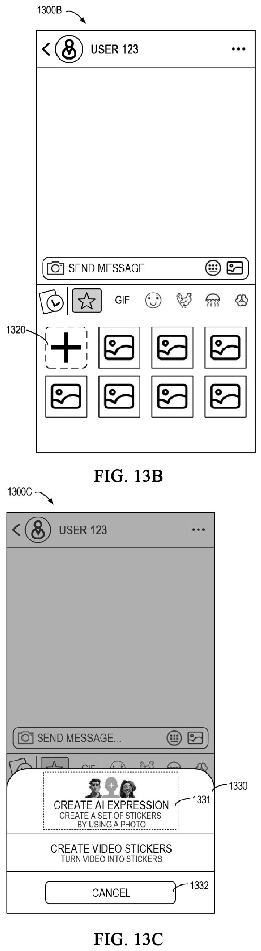

As shown in FIGS. 13A to 13C, an example 1300A and an example 1300B may be, for example, a messaging interface presenting an expression panel. For example, the terminal device 120 may present the example 1300A or the example 1300B in response to detecting a trigger operation on the expression panel in the messaging interface. The expression panel in the example 1300A includes a first expression creation entry 1310 specific to the first type and an overall first expression creation entry 1320. For example, the first expression creation entry 1310 may be presented in the expression panel in the form of a banner. The expression panel in the example 1300B includes only the overall first expression creation entry 1320. In some embodiments, the terminal device 120 may, for example, preferentially present the example 1300A, and directly present the example 1300B in response to the number of presentations of the first expression creation entry 1310 reaching a predetermined number (e.g., 3). For example, the terminal device 120 may present an example 1300C in response to detecting a trigger operation on the overall first expression creation entry 1320. A card 1330 may be presented, for example, in the example 1300C. A first expression creation entry 1331 and a cancel control 1332 are presented in the card 1330. The terminal device 120 may return to present the example 1300B in response to detecting a trigger operation on the cancel control 1332.

For the messaging interface or the comment reply interface for the work, in some embodiments, the terminal device 120 may present an expression navigation bar in the messaging interface or the comment reply interface for the work. The expression navigation bar includes a first label corresponding to the first type and a second label corresponding to at least one further expression type. The terminal device 120 may present, for example, in response to detecting that the first label is triggered, a first expression creation entry for the first type.

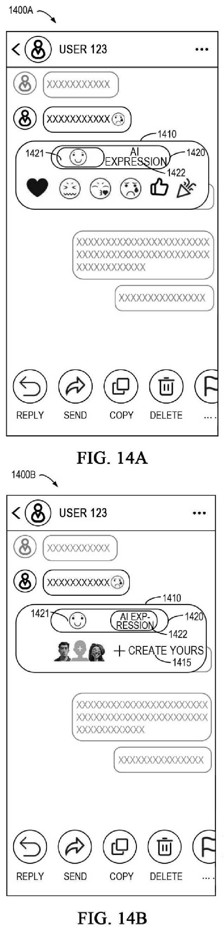

As shown in FIGS. 14A and 14B, an example 1400A and an example 1400B may be, for example, a messaging interface presenting an expression navigation bar 1420. The expression navigation bar 1420 may be presented in an area 1410. The expression navigation bar 1420 includes a first label 1422 and a second label 1421. In response to detecting a trigger operation on the first label 1422, the terminal device 120 presents the example 1400B shown in FIG. 14A. A first expression creation entry 1415 for the first type may be presented in the example 1400B.

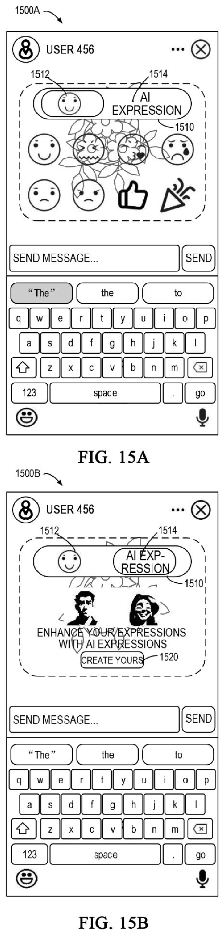

As shown in FIGS. 15A and 15B, an example 1500A and an example 1500B may be, for example, a comment reply interface presenting an expression navigation bar 1510. The expression navigation bar 1510 may include a first label 1514 and a second label 1512. In response to detecting a trigger operation on the first label 1514, the terminal device 120 presents the example 1500B shown in FIG. 15B. A first expression creation entry 1520 for the first type may be presented in the example 1500B.

In some embodiments, the expression creation operation may further include an expression creation operation for an avatar image of the user 110. The terminal device 120 may, for example, present a second expression creation entry for the avatar image of the user 110 in a message page. In some embodiments, in response to the user 110 uploading the avatar image, the terminal device 120 may directly detect the avatar image to determine whether the avatar image satisfies the condition related to the face area as described above. The terminal device 120, in turn, presents the second expression creation entry for the avatar image of the user 110 in the message page only when it is determined that the avatar image of the user 110 satisfies the condition related to the face area.

The terminal device 120 may further detect an expression creation operation for the avatar image of the user 110 based on a trigger for the second expression creation entry. The terminal device 120 obtains, in response to detecting an expression creation operation for the avatar image of the user 110, the avatar image of the user 110, and directly creates at least one expression image based on the avatar image. In some embodiments, the terminal device 120 may also directly create, in response to the avatar image of the user 110 satisfying the condition related to the face area, at least one expression image based on the avatar image, and store the obtained at least one expression image only when the trigger operation on the second expression creation entry is detected. That is, in this case, if the trigger operation on the second expression creation entry is not detected, the terminal device 120 may delete the generated at least one expression image. In some embodiments, the terminal device 120 may further provide, after creation of the at least one expression image is completed, a second expression viewing entry for the at least one expression image in the user interface to view the created at least one expression.

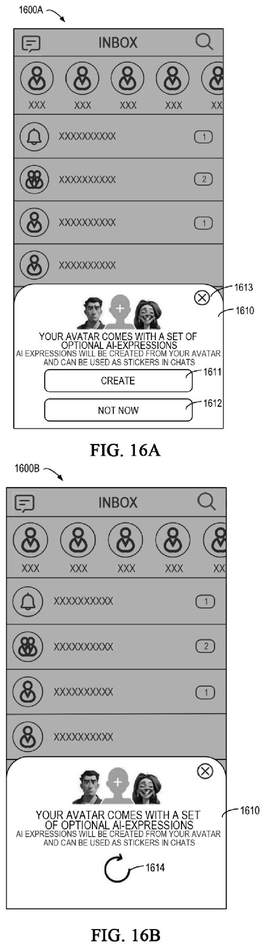

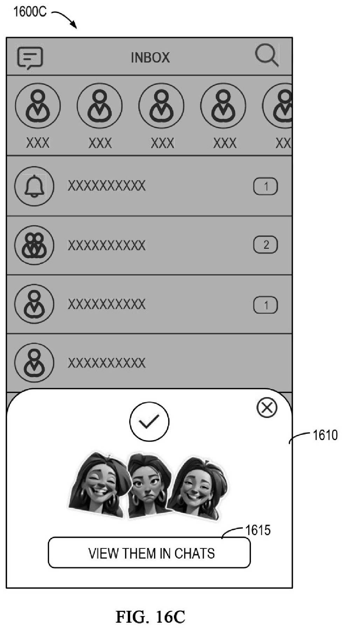

As shown in FIGS. 16A to 16C, examples 1600A to 1600C may, for example, be a message page. The terminal device 120, for example, may present an interface 1610 in the example 1600A in response to the avatar image of the user 110 satisfying the condition related to the face area. A second expression viewing portal 1611 is presented in the interface 1610. A cancel control 1613 and an operation control 1612 may also be presented in the interface 1610. The terminal device 120 may determine not to use the avatar image to generate the at least one expression image and cancel presentation of the interface 1610 in response to detecting a trigger operation on the cancel control 1613 or the operation control 1612. The terminal device 120 may use the avatar image of the user 110 to create the at least one expression image in response to detecting a trigger operation on the second expression viewing entry 1611. In the process of creating the at least one expression image, the terminal device 120 may present the example 1600B. An element 1614 is presented in the interface 1610 in the example 1600B, and the element 1614 is configured to prompt the user 110 that at least one expression image is currently being created based on the avatar image. In response to a completion of creation of at least one expression image, the terminal device 120 may present the example 1600C. A second expression viewing entry 1615 for at least one expression image is presented in the interface 1610 in the example 1600C. The terminal device 120 may, for example, switch to presenting the example 900 shown in FIG. 9 to view the created at least one expression in response to detecting a trigger operation on the second expression viewing entry 1615.

In summary, according to the embodiments of the present disclosure, by means of the image generation capability of the model, the user may complete the customization of the expression image by simply providing the target image to obtain his own unique expression image. The image creation process is simple and may provide different expression images for different users, thereby enriching the message interaction process.

### Example Process

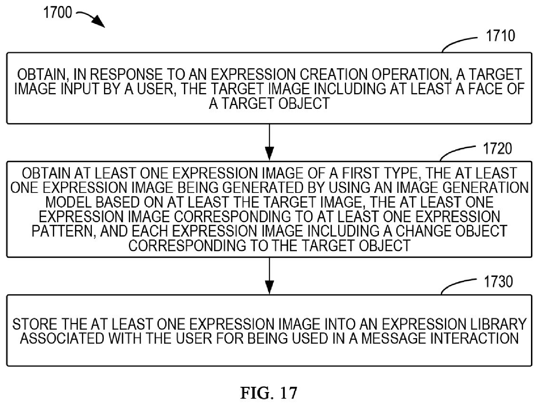

FIG. 17 shows a flowchart of a process 1700 for expression creation according to some embodiments of the present disclosure. The process 1700 may be implemented at the terminal device 120. The process 1700 is described below with reference to FIG. 1.

At block 1710, the terminal device 120 obtains, in response to an expression creation operation, a target image input by a user. The target image includes at least a face of a target object.

At block 1720, the terminal device 120 obtains at least one expression image of a first type. The at least one expression image is generated by using an image generation model based on at least the target image. The at least one expression image corresponds to at least one expression pattern, and each expression image includes a change object corresponding to the target object.

At block 1730, the terminal device 120 stores the at least one expression image into an expression library associated with the user for use in a message interaction.

In some embodiments, the process 1700 further includes: detecting, in a user interface supporting the message interaction, an expression creation operation corresponding to the first type. Obtaining of the target image is based on the expression creation operation corresponding to the first type.

In some embodiments, the at least one expression image is generated by using the image generation model based on the target image and further based on a prompt input, and the prompt input indicates a style and/or expression pattern of at least one change object to be generated.

In some embodiments, the at least one expression image is generated by using the image generation model based on the target image and further based on a user selection, and the user selection indicates a style and/or expression pattern of at least one change object to be generated.

In some embodiments, a face of the change object has a corresponding expression pattern.

In some embodiments, obtaining the target image includes: providing an image shooting interface or an image selection interface based on detecting the expression creation operation, capturing an image in the image shooting interface by using a camera, and selecting the captured image in the image selection interface; providing, in accordance with a determination that the image captured in the image shooting interface or the image selected in the image selection interface fails to satisfy a condition related to a face area, prompt information to prompt a re-capture or re-selection of the image; and obtaining, in accordance with a determination that the captured image or the selected image satisfies the condition related to the face area, the captured image or the selected image as the target image.

In some embodiments, the image shooting interface includes a predetermined border for defining a facial contour.

In some embodiments, the condition related to the face area indicates at least one condition of the following: the face area of the target object in the captured image being located within a predetermined border, the face of the target object in the captured image being at eye level, or a neutral expression being displayed on the face of the target object in the captured image, and wherein the prompt information is determined based on one or more conditions of the at least one condition that are not satisfied.

In some embodiments, obtaining the target image includes: presenting, in accordance with a determination that an avatar image of the user satisfies the condition related to the face area, a second expression creation entry for the avatar image of the user in the image shooting interface; and obtaining, based on a trigger for the second expression creation entry, the avatar image of the user as the target image.

In some embodiments, the process 1700 further includes: providing a progress page, the progress page presenting a first progress indicator while presenting the target image to indicate a creation progress of the at least one expression image; and/or providing a further page other than the progress page, presenting a second progress indicator in the further page to indicate the creation progress of the at least one expression image, a trigger for the second progress indicator enabling a jump to the progress page.

In some embodiments, the process 1700 further includes: providing a push notification after a completion of creating the at least one expression image, to indicate that expression creation is completed, where the push notification includes a first expression viewing entry to view the created at least one expression.

In some embodiments, the at least one expression pattern includes at least one of: at least one predefined expression pattern, at least one expression pattern indicated by the user, or at least one expression pattern determined based on a trend event.

In some embodiments, the user interface includes a messaging interface for the user and a further user, a comment reply interface for a work, or a message page. The message page includes a list of messaging interfaces. Detecting the expression creation operation includes: presenting, in the user interface, a first expression creation entry for the first type; and detecting the expression creation operation based on a trigger for the first expression creation entry.

In some embodiments, presenting the first expression creation entry includes: presenting an expression guidance card in the messaging interface, the expression guidance card including at least a first expression creation entry for the first type. The expression guidance card is maintained to be presented after a last message of the messaging interface.

In some embodiments, presenting the expression guidance card includes: presenting the expression guidance card in the messaging interface in accordance with a determination of at least one of: the user failing to create an expression image of the first type, the messaging interface including at least one historical message, or the messaging interface excluding an unread message.

In some embodiments, the process 1700 further includes: canceling, in response to detecting a cancel presentation operation on the expression guidance card, presentation of the expression guidance card; presenting a first embedded message in the messaging interface, the first embedded message including at least the first expression creation entry; and canceling, in response to detecting that a new message is received or sent in the messaging interface, or in response to detecting that presentation of the messaging interface is canceled, presentation of the first embedded message in the messaging interface.

In some embodiments, presenting the first expression creation entry includes: presenting a second embedded message in the messaging interface based on a message being received from the further user in the messaging interface and the message including a first expression image of the first type, the second embedded message including at least the first expression creation entry.

In some embodiments, presenting the second embedded message includes: presenting the second embedded message after the message from the further user. A new message received in the messaging interface is presented after the second embedded message.

In some embodiments, presenting the second embedded message includes: presenting the second embedded message in the messaging interface further based on at least one of: the user failing to create an expression image of the first type, or an expression guidance card failing to be presented in the messaging interface.

In some embodiments, presenting the first expression creation entry includes: presenting, in response to detecting a trigger operation on a second expression image of the first type being sent or received in the messaging interface, an expression viewing panel for the second expression image in the messaging interface. The expression viewing panel includes the first expression creation entry.

In some embodiments, presenting the expression viewing panel in the messaging interface includes: providing the first expression creation entry in the expression viewing panel based on determining at least one of: the user failing to create an expression image of the first type, or the second expression image being not created by the user.

In some embodiments, the process 1700 further includes: including, in accordance with the user having created the expression image of the first type or the second expression image being created by the user, at least one of a sending control and a favorite control for the second expression image in the expression viewing panel.

In some embodiments, presenting the first expression creation entry includes: presenting, in response to detecting a trigger operation on an expression panel in the messaging interface, the expression panel in the messaging interface. The expression panel is provided with at least the first expression creation entry for the first type.

In some embodiments, the expression panel includes at least one of: a first expression creation entry specific to the first type, or an overall first expression creation entry. At least the first expression creation entry specific to the first type is presented based on a trigger for the overall first expression creation entry.

In some embodiments, presenting the first expression creation entry includes: presenting an expression navigation bar in the messaging interface or the comment reply interface for the work, the expression navigation bar including a first label corresponding to the first type and a second label corresponding to at least one further expression type; and presenting, in response to detecting that the first label is triggered, a first expression creation entry for the first type.

In some embodiments, the expression creation operation includes an expression creation operation for an avatar image of the user, and detecting the expression creation operation includes: presenting, in a message page, a second expression creation entry for the avatar image of the user; and detecting the expression creation operation for the avatar image of the user based on a trigger for the second expression creation entry.

In some embodiments, the process 1700 further includes: providing, after a completion of creating the at least one expression image, a second expression viewing entry for the at least one expression image in the user interface to view the created at least one expression.

In some embodiments, the at least one expression image includes at least one of: at least one static expression image, or at least one dynamic expression image.

### Example Apparatus and Device

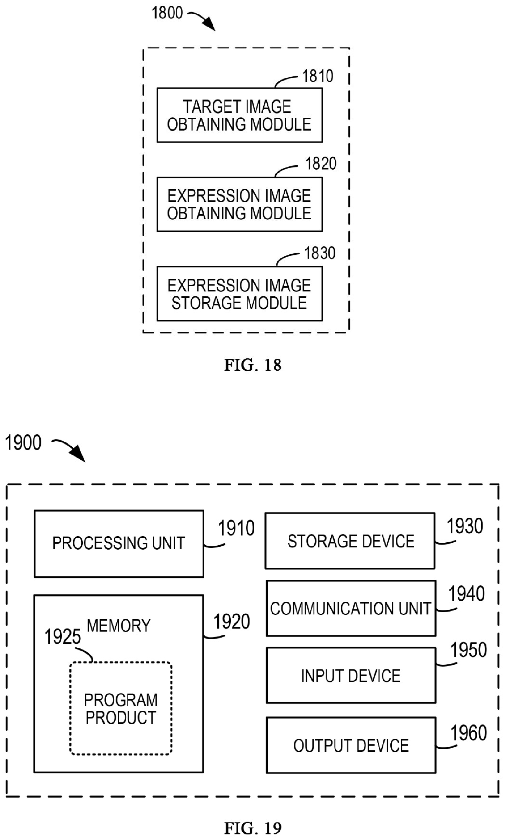

Embodiments of the present disclosure also provide a corresponding apparatus for implementing the above method or process. FIG. 18 is a schematic structural block diagram of an apparatus 1800 for expression creation according to some embodiments of the present disclosure. The apparatus 1800 may be implemented or included in the terminal device 120. Various modules/components in the apparatus 1800 may be implemented by hardware, software, firmware, or any combination thereof.

As shown in FIG. 18, the apparatus 1800 includes a target image obtaining module 1810 configured to obtain, in response to an expression creation operation, a target image input by a user, the target image including at least a face of a target object. The apparatus 1800 further includes an expression image obtaining module 1820 configured to obtain at least one expression image of a first type, the at least one expression image being generated based on at least the target image by using an image generation model. The at least one expression image corresponds to at least one expression pattern, and each expression image includes a change object corresponding to the target object. The apparatus 1800 further includes an expression image storage module 1830 configured to store the at least one expression image into an expression library associated with the user for use in a message interaction.

In some embodiments, the apparatus 1800 further includes: a creation operation detection module configured to detect, in a user interface supporting the message interaction, an expression creation operation corresponding to the first type, and obtaining of the target image is based on the expression creation operation corresponding to the first type.

In some embodiments, the at least one expression image is generated by using the image generation model based on the target image and further based on a prompt input, the prompt input indicating a style and/or expression pattern of at least one change object to be generated.

In some embodiments, the at least one expression image is generated by using the image generation model based on the target image and further based on a user selection, the user selection indicating a style and/or expression pattern of at least one change object to be generated.

In some embodiments, a face of the change object has a corresponding expression pattern.

In some embodiments, the target image obtaining module 1810 includes: an interface providing module configured to provide an image shooting interface or an image selection interface based on detecting the expression creation operation, capture an image in the image shooting interface by using a camera, and select the captured image in the image selection interface; a prompt information providing module configured to provide, in accordance with a determination that the image captured in the image shooting interface or the image selected in the image selection interface fails to satisfy a condition related to a face area, prompt information to prompt a re-capture or re-selection of the image; and an image obtaining module configured to obtain, in accordance with a determination that the captured image or the selected image satisfies the condition related to the face area, the captured image or the selected image as the target image.

In some embodiments, the image shooting interface includes a predetermined border for defining a facial contour.

In some embodiments, the condition related to the face area indicates at least one condition of the following: the face area of the target object in the captured image being located within a predetermined border, the face of the target object in the captured image being at eye level, or a neutral expression being displayed on the face of the target object in the captured image, and the prompt information is determined based on one or more conditions of the at least one condition that are not satisfied.

In some embodiments, the target image obtaining module 1810 includes: a second entry presentation module configured to present, in accordance with a determination that an avatar image of the user satisfies the condition related to the face area, a second expression creation entry for the avatar image of the user in the image shooting interface; and an avatar image obtaining module configured to obtain, based on a trigger for the second expression creation entry, the avatar image of the user as the target image.

In some embodiments, the apparatus 1800 further includes: a progress page providing module configured to provide a progress page, the progress page presenting a first progress indicator while presenting the target image to indicate a creation progress of the at least one expression image; and/or a further page providing module configured to provide a further page other than the progress page, a second progress indicator being presented in the further page to indicate the creation progress of the at least one expression image, a trigger for the second progress indicator enabling a jump to the progress page.

In some embodiments, the apparatus 1800 further includes: a push notification providing module configured to provide a push notification after a completion of creating the at least one expression image, to indicate that expression creation is completed. The push notification includes a first expression viewing entry to view the created at least one expression.

In some embodiments, the at least one expression pattern includes at least one of: at least one predefined expression pattern, at least one expression pattern indicated by the user, or at least one expression pattern determined based on a trend event.

In some embodiments, the user interface includes a messaging interface for the user and a further user, a comment reply interface for a work, or a message page. The message page includes a list of messaging interfaces, and the creation operation detection module includes: a first entry presentation module configured to present, in the user interface, a first expression creation entry for the first type; and a first detection module configured to detect the expression creation operation based on a trigger for the first expression creation entry.

In some embodiments, the first entry presentation module includes: a guidance card presentation module configured to present an expression guidance card in the messaging interface, the expression guidance card including at least a first expression creation entry for the first type. The expression guidance card is maintained to be presented after a last message of the messaging interface.

In some embodiments, the first entry presentation module is further configured to present the expression guidance card in the messaging interface in accordance with a determination of at least one of: the user failing to create an expression image of the first type, the messaging interface including at least one historical message, or the messaging interface excluding an unread message.

In some embodiments, the apparatus 1800 further includes: a card cancel presentation module configured to cancel, in response to detecting a cancel presentation operation on the expression guidance card, presentation of the expression guidance card; a first embedded message presentation module configured to present a first embedded message in the messaging interface, the first embedded message including at least the first expression creation entry; and a first embedded message cancel module configured to cancel, in response to detecting that a new message is received or sent in the messaging interface, or in response to detecting that presentation of the messaging interface is canceled, presentation of the first embedded message in the messaging interface.

In some embodiments, the first entry presentation module includes: a second embedded message presentation module configured to present a second embedded message in the messaging interface based on a message being received from the further user in the messaging interface and the message including a first expression image of the first type, the second embedded message including at least the first expression creation entry.

In some embodiments, the second embedded message presentation module is further configured to: present the second embedded message after the message from the further user. A new message received in the messaging interface is presented after the second embedded message.

In some embodiments, the second embedded message presentation module is further configured to: present the second embedded message in the messaging interface further based on at least one of: the user failing to create an expression image of the first type, or an expression guidance card failing to be presented in the messaging interface.

In some embodiments, the first entry presentation module includes: a viewing panel presentation module configured to present, in response to detecting a trigger operation on a second expression image of the first type sent or received in the messaging interface, an expression viewing panel for the second expression image in the messaging interface, the expression viewing panel including the first expression creation entry.

In some embodiments, the viewing panel presentation module is further configured to provide the first expression creation entry in the expression viewing panel based on determining at least one of: the user failing to create an expression image of the first type, or the second expression image being not created by the user.

In some embodiments, the apparatus 1800 further includes: including, in accordance with the user having created the expression image of the first type or the second expression image being created by the user, at least one of a sending control and a favorite control for the second expression image in the expression viewing panel.

In some embodiments, the first entry presentation module includes: an expression panel presentation module configured to present, in response to detecting a trigger operation on an expression panel in the messaging interface, the expression panel in the messaging interface, the expression panel being at least provided with the first expression creation entry for the first type.

In some embodiments, the expression panel includes at least one of: a first expression creation entry specific to the first type, an overall first expression creation entry, at least the first expression creation entry specific to the first type being presented based on a trigger for the overall first expression creation entry.

In some embodiments, the first entry presentation module includes: an expression navigation bar presentation module configured to present an expression navigation bar in the messaging interface or the comment reply interface for the work, the expression navigation bar including a first label corresponding to the first type and a second label corresponding to the at least one further expression type; and a presentation module configured to present, in response to detecting that the first label is triggered, a first expression creation entry for the first type.

In some embodiments, the expression creation operation includes an expression creation operation for an avatar image of the user, and the creation operation detection module includes: a second expression creation entry presentation module configured to present, in the message page, a second expression creation entry for the avatar image for the user; and a detection module configured to detect the expression creation operation for the avatar image of the user based on a trigger for the second expression creation entry.

In some embodiments, the apparatus 1800 further includes: a second expression viewing entry providing module configured to provide, after a completion of creating the at least one expression image, a second expression viewing entry for the at least one expression image in the user interface to view the created at least one expression.

In some embodiments, the at least one expression image includes at least one of: at least one static expression image, or at least one dynamic expression image.

The units and/or modules included in the apparatus 1800 may be implemented in various manners, including software, hardware, firmware, or any combination thereof. In some embodiments, one or more units and/or modules may be implemented using software and/or firmware, such as machine-executable instructions stored on a storage medium. In addition to or as an alternative to machine-executable instructions, some or all of the units and/or modules in the apparatus 1800 may be implemented, at least in part, by one or more hardware logic components. By way of example and not limitation, example types of hardware logic components that may be used include field programmable gate arrays (FPGAs), application specific integrated circuits (ASICs), application specific standards (ASSPs), system-on-a-chip (SOCs), complex programmable logic devices (CPLDs), or the like.

It should be understood that one or more steps of the above method may be performed by a suitable electronic device or a combination of electronic devices. Such an electronic device or a combination of electronic devices may include, for example, the terminal device 120 and the server 130 in FIG. 1.

FIG. 19 illustrates a block diagram of an electronic device 1900 in which one or more embodiments of the present disclosure may be implemented. It should be understood that the electronic device 1900 illustrated in FIG. 19 is merely illustrative and should not constitute any limitation on the functionality and scope of the embodiments described herein. The electronic device 1900 shown in FIG. 19 may be configured to implement the terminal device 120 in FIG. 1.

As shown in FIG. 19, the electronic device 1900 is in the form of a general-purpose electronic device. Components of the electronic device 1900 may include, but are not limited to, one or more processors or processing units 1910, a memory 1920, a storage device 1930, one or more communication units 1940, one or more input devices 1950, and one or more output devices 1960. The processing unit 1910 may be an actual or virtual processor and capable of performing various processes according to programs stored in the memory 1920. In multiprocessor systems, a plurality of processing units execute computer-executable instructions in parallel to improve the parallel processing capability of the electronic device 1900.

The electronic device 1900 generally includes a plurality of computer storage media. Such media may be any available media accessible to the electronic device 1900, including, but not limited to, volatile and non-volatile media, removable and non-removable media. The memory 1920 may be volatile memory (e.g., a register, a cache, a random access memory (RAM)), a non-volatile memory (e.g., a read-only memory (ROM), an electrically erasable programmable read-only memory (EEPROM), a flash memory), or some combination thereof. The storage device 1930 may be a removable or non-removable medium and may include a machine-readable medium, such as a flash drive, a magnetic disk, or any other medium, which may be capable of storing information and/or data and may be accessed within the electronic device 1900.

The electronic device 1900 may further include additional removable/non-removable, volatile/non-volatile storage medium/media. Although not shown in FIG. 19, a disk drive for reading from or writing into a removable, nonvolatile magnetic disk (e.g., a "floppy disk") and an optical disk drive for reading from or writing into a removable, nonvolatile optical disk may be provided. In these cases, each drive may be connected to a bus (not shown) by one or more data media interfaces. The memory 1920 may include a computer program product 1925 having one or more program modules configured to perform various methods or actions of various embodiments of the present disclosure.

The communication unit 1940 is configured to communicate with other electronic device(s) through a communication medium. Additionally, the functionality of components of the electronic device 1900 may be implemented in a single computing cluster or a plurality of computing machines capable of communicating through a communication connection. Thus, the electronic device 1900 may operate in a networked environment using logical connections with one or more other servers, a network personal computers (PC), or another network node.

The input device 1950 may be one or more input devices such as a mouse, a keyboard, a trackball, or the like. The output device 1960 may be one or more output devices, such as a display, a speaker, a printer, or the like. The electronic device 1900 may also communicate with one or more external devices (not shown) through the communication unit 1940 as needed, the external device such as a storage device, a display device, etc., communicates with one or more devices that enable a user to interact with the electronic device 1900, or communicates with any device (e.g., a network card, a modem, etc.) that enables the electronic device 1900 to communicate with one or more other electronic devices. Such communication may be performed via an input/output (I/O) interface (not shown).

According to example implementations of the present disclosure, there is provided a computer-readable storage medium having computer-executable instructions stored thereon. The computer-executable instructions are executed by a processor to implement the method described above. According to example implementations of the present disclosure, a computer program product is further provided. The computer program product is tangibly stored on a non-transitory computer-readable medium and includes computer-executable instructions, and the computer-executable instructions are executed by a processor to implement the method described above.

Aspects of the present disclosure are described herein with reference to flowchart(s) and/or block diagram(s) of a method, an apparatus, a device, and a computer program product implemented according to the present disclosure. It should be understood that each block of the flowchart(s) and/or block diagram(s), and combination(s) of blocks in the flowchart(s) and/or block diagram(s), may be implemented by computer readable program instructions.

These computer-readable program instructions may be provided to a processing unit of a general purpose computer, a special purpose computer, or other programmable data processing apparatus to produce a machine, such that the instructions, when executed by a processing unit of a computer or other programmable data processing apparatus, produce apparatuses to implement function(s)/act(s) specified in one or more blocks of the flowchart(s) and/or block diagram(s). These computer-readable program instructions may also be stored in a computer-readable storage medium, and the instructions cause the computer, programmable data processing apparatus, and/or other devices to operate in a particular manner, such that the computer-readable medium storing instructions includes an article of manufacture including instructions to implement aspects of the function(s)/act(s) specified in one or more blocks in the flowchart(s) and/or block diagram(s).

The computer-readable program instructions may be loaded onto a computer, other programmable data processing apparatus, or other apparatus, such that a series of operational steps are performed on the computer, other programmable data processing apparatus, or other apparatus to produce a computer-implemented process such that the instructions executed on the computer, other programmable data processing apparatus, or other apparatus implement the function(s)/act(s) specified in one or more blocks of the flowchart(s) and/or block diagram(s).

The flowchart and block diagrams in the figures show architecture, functionality, and operation of possible implementations of a system, a method, and a computer program product according to various implementations of the present disclosure. In this regard, each block in the flowchart(s) or block diagram(s) may represent a module, program segment, or portion of an instruction that includes one or more executable instructions for implementing the specified logical function. In some alternative implementations, the function noted in the block may also occur in a different order than noted in the figures. For example, two consecutive blocks may actually be performed substantially in parallel, which may sometimes be performed in the reverse order, depending on the functionality involved. It is also noted that each block in the block diagram(s) and/or flowchart(s), as well as combinations of blocks in the block diagram(s) and/or flowchart(s), may be implemented with a dedicated hardware-based system that performs the specified function(s) or action(s), or may be implemented in a combination of dedicated hardware and computer instructions.

Various implementations of the present disclosure have been described above, which are illustrative, not exhaustive, and are not limited to the implementations disclosed. Many modifications and variations will be apparent to those of ordinary skill in the art without departing from the scope and spirit of various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A method for expression creation, comprising:
obtaining, in response to an expression creation operation, a target image input by a user, the target image comprising at least a face of a target object;
obtaining at least one expression image of a first type, the at least one expression image being generated by using an image generation model based on at least the target image, the at least one expression image corresponding to at least one expression pattern, and each expression image comprising a change object corresponding to the target object; and
storing the at least one expression image into an expression library associated with the user for use in a message interaction.

2. The method of claim 1, further comprising:
detecting, in a user interface supporting the message interaction, an expression creation operation corresponding to the first type, obtaining of the target image being based on the expression creation operation corresponding to the first type.

3. The method of claim 1, wherein the at least one expression image is generated by using the image generation model based on the target image and further based on a prompt input, the prompt input indicating a style and/or expression pattern of at least one change object to be generated.

4. The method of claim 1, wherein the at least one expression image is generated by using the image generation model based on the target image and further based on a user selection, the user selection indicating a style and/or expression pattern of at least one change object to be generated.

5. The method of claim 1, wherein a face of the change object has a corresponding expression pattern.

6. The method of claim 1, wherein obtaining the target image comprises:
providing an image shooting interface or an image selection interface based on detecting the expression creation operation, capturing an image in the image shooting interface by using a camera, and selecting the captured image in the image selection interface;
providing, in accordance with a determination that the image captured in the image shooting interface or the image selected in the image selection interface fails to satisfy a condition related to a face area, propmt information to prompt a re-capture or re-selection of the image; and
obtaining, in accordance with a determination that the captured image or the selected image satisfies the condition related to the face area, the captured image or the selected image as the target image.

7. The method of claim 6, wherein the image shooting interface comprises a predetermined border for defining a facial contour.

8. The method of claim 6, wherein the condition related to the face area indicates at least one condition of the following:
the face area of the target object in the captured image being located within a predetermined border,
the face of the target object in the captured image being at eye level, or
a neutral expression being displayed on the face of the target object in the captured image, and
wherein the prompt information is determined based on one or more conditions of the at least one condition that are not satisfied.

9. The method of claim 6, wherein obtaining the target image comprises:
presenting, in accordance with a determination that an avatar image of the user satisfies the condition related to the face area, a second expression creation entry for the avatar image of the user in the image shooting interface; and
obtaining, based on a trigger for the second expression creation entry, the avatar image of the user as the target image.

10. The method of claim 1, further comprising:
providing a progress page, the progress page presenting a first progress indicator while presenting the target image to indicate a creation progress of the at least one expression image; and/or
providing a further page other than the progress page, a second progress indicator being presented in the further page to indicate the creation progress of the at least one expression image, a trigger for the second progress indicator enabling a jump to the progress page.

11. The method of claim 1, further comprising:
providing a push notification after a completion of creating the at least one expression image, to indicate that expression creation is completed,
wherein the push notification comprises a first expression viewing entry to view the created at least one expression.

12. The method of claim 1, wherein the at least one expression pattern comprises at least one of:
at least one predefined expression pattern,
at least one expression pattern indicated by the user, or
at least one expression pattern determined based on a trend event.

13. The method of claim 2, wherein the user interface comprises a messaging interface for the user and a further user, a comment reply interface for a work, or a message page, the message page comprising a list of messaging interfaces, and
wherein detecting the expression creation operation comprises:
presenting, in the user interface, a first expression creation entry for the first type; and
detecting the expression creation operation based on a trigger for the first expression creation entry.

14. The method of claim 13, wherein presenting the first expression creation entry comprises:
presenting an expression guidance card in the messaging interface, the expression guidance card comprising at least a first expression creation entry for the first type,
wherein the expression guidance card is maintained to be presented after a last message of the messaging interface.

15. The method of claim 14, wherein presenting the expression guidance card comprises:
presenting the expression guidance card in the messaging interface in accordance with a determination of at least one of:
the user failing to create an expression image of the first type,
the messaging interface comprising at least one historical message, or
the messaging interface excluding an unread message.

16. The method of claim 14, further comprising:
canceling, in response to detecting a cancel presentation operation on the expression guidance card, presentation of the expression guidance card;
presenting a first embedded message in the messaging interface, the first embedded message comprising at least the first expression creation entry; and
canceling, in response to detecting that a new message is received or sent in the messaging interface, or in response to detecting that presentation of the messaging interface is canceled, presentation of the first embedded message in the messaging interface.

17. The method of claim 13, wherein presenting the first expression creation entry comprises:
presenting a second embedded message in the messaging interface based on a message being received from the further user in the messaging interface and the message comprising a first expression image of the first type, the second embedded message comprising at least the first expression creation entry.

18. The method of claim 17, wherein presenting the second embedded message comprises:
presenting the second embedded message after the message from the further user,
wherein a new message received in the messaging interface is presented after the second embedded message.

19. The method of claim 17, wherein presenting the second embedded message comprises:
presenting the second embedded message in the messaging interface further based on at least one of:
the user failing to create an expression image of the first type,
an expression guidance card failing to be presented in the messaging interface.

20. The method of claim 13, wherein presenting the first expression creation entry comprises:
presenting, in response to detecting a trigger operation on a second expression image of the first type being sent or received in the messaging interface, an expression viewing panel for the second expression image in the messaging interface, the expression viewing panel comprising the first expression creation entry.

21. The method of claim 20, wherein presenting the expression viewing panel in the messaging interface comprises:
providing the first expression creation entry in the expression viewing panel based on determining at least one of:
the user failing to create an expression image of the first type,
the second expression image being not created by the user.

22. The method of claim 21, further comprising:
comprising, in accordance with the user having created the expression image of the first type or the second expression image being created by the user, at least one of a sending control or a favorite control for the second expression image in the expression viewing panel.

23. The method of claim 13, wherein presenting the first expression creation entry comprises:
presenting, in response to detecting a trigger operation on an expression panel in the messaging interface, the expression panel in the messaging interface, the expression panel being provided with at least the first expression creation entry for the first type.

24. The method of claim 23, wherein the expression panel comprises at least one of:
a first expression creation entry specific to the first type,
an overall first expression creation entry, at least the first expression creation entry specific to the first type being presented based on a trigger for the overall first expression creation entry.

25. The method of claim 13, wherein presenting the first expression creation entry comprises:
presenting an expression navigation bar in the messaging interface or the comment reply interface for the work, the expression navigation bar comprising a first label corresponding to the first type and a second label corresponding to at least one further expression type; and
presenting, in response to detecting that the first label is triggered, a first expression creation entry for the first type.

26. The method of claim 2, wherein the expression creation operation comprises an expression creation operation for an avatar image of the user, wherein detecting the expression creation operation comprises:
presenting, in a message page, a second expression creation entry for the avatar image of the user; and
detecting the expression creation operation for the avatar image of the user based on a trigger for the second expression creation entry.

27. The method of claim 26, further comprising:
providing, after a completion of creating the at least one expression image, a second expression viewing entry for the at least one expression image in the user interface to view the created at least one expression.

28. The method of any of claims 1 to 27, wherein the at least one expression image comprises at least one of: at least one static expression image, or at least one dynamic expression image.

29. An apparatus for expression creation, comprising:
a target image obtaining module configured to obtain, in response to an expression creation operation, a target image input by a user, the target image comprising at least a face of a target object;
an expression image obtaining module configured to obtain at least one expression image of a first type, the at least one expression image being generated based on at least the target image by using an image generation model, the at least one expression image corresponding to at least one expression pattern, and each expression image comprising a change object corresponding to the target object; and
an expression image storage module configured to store the at least one expression image into an expression library associated with the user for use in a message interaction.

30. An electronic device, comprising:
at least one processing unit; and
at least one memory coupled to the at least one processing unit and storing instructions for execution by the at least one processing unit, the instructions, when executed by the at least one processing unit, causing the electronic device to perform the method of any of claims 1 to 28.

31. A computer-readable storage medium having a computer program stored thereon, the computer program being executable by a processor to implement the method of any of claims 1 to 28.
